# EUROPEAN PATENT APPLICATION

(11) **EP 1 900 705 A1**
(43) Date of publication of application: **19.03.2008**
(21) Application number: 07018136.7
(22) Date of filing: 14.09.2007
(51) Int. Cl.: C04B 28/04, C09K 8/46, C04B 28/26

(54) **Low density cements for use in cementing operations**

(30) Priority: 14.09.2006 US 844536 P; 14.09.2006 US 844433 P; 08.12.2006 US 873734 P
(71) Applicant: BJ SERVICES COMPANY, Houston TX 77041 (US)
(72) Inventor: Fraser, Michael R., Calgary, Alberta T1Y 2J4 (CA)
(74) Representative: Stenger, Watzke & Ring

(57) **Abstract**

A cement mix which is suitable for cementing in subterranean formations to provide zonal isolation or for blocking or plugging an abandoned pipeline or back filling a mine shaft, tunnel or excavation contains Portland cement or a mixture of two components selected from Portland cement, fly ash, slag, silica fume, gypsum, limestone and bentonite; and diatomaceous earth, preferably having a BET nitrogen adsorption specific surface area between from about 30 to about 100 m²/g. The cement mix may further contain an alkali metasilicate and/or alkali silicate, zeolite and/or aluminum silicate, an accelerator, such as an inorganic salt, and/or an alkaline metal oxide, as well as a lightweight density modifying agent, including glass, ceramic or plastic spheres. A cementitious slurry, formulated from the cement mix, has a density less than or equal to 1500 kg/m³ and exhibits good compressive strength.

## Description

### Field of the Invention

This invention relates to cement mixes and low density cementitious slurries prepared therefrom which are useful in cementing operations within subterranean formations of a well. In particular such cementitious slurries are useful in the zonal isolation of subsurface formations. Such cement mixes and slurries are further useful in the blocking, plugging or back filling of conduits such as pipelines, mine shafts, tunnels and excavations, including hydrocarbon recovery conduits as well as conduits used in the recovery of minerals, copper, potash, coal, copper, potassium chloride, etc.

### Background of the Invention

Hydraulic cements are cements that set and develop compressive strength due to a hydration reaction. Such cements can therefore be set under water. As such, hydraulic cements are often used for cementing pipes or casings within a wellbore of a subterranean formation for the construction of oil, gas and water wells.

In some locations, the subterranean zones or formations into or through which wells are drilled are weak. Such zones and formations typically have high permeability characteristics and exhibit low compressive and tensile strengths. The resistance of such subterranean zones or formations to shear is therefore low and such zones or formations typically have very low fracture gradients. When a well fluid, such as a hydraulic cementitious slurry is introduced into a wellbore penetrating such a subterranean zone or formation, the hydrostatic pressure exerted on the walls of the wellbore may exceed the fracture gradient of the zone or formation. Fractures may form in the zone or formation and the cementitious slurry may be lost in such fractures.

When weak subterranean formations are encountered, it is therefore often necessary to use lightweight or low density cement. Low density cementitious compositions, in addition to being more economical, lower the hydrostatic pressure on the underground reservoir and thus minimize damage to it. However, many commercially available lightweight low density cement compositions are unacceptable for subterranean zones or formations having low fracture gradients.

In some countries, governmental regulations require such low density cements to set quickly in order to minimize damage potential on the formation. For example, in Canada, it is mandated that the compressive strength (API RP10B-2/ISO 10426-2) of the cementitious slurry be greater than or equal to 3.5 MPa within 48 hours after being introduced into the formation or zone, as per Alberta Energy and Utility Board Directive 9 Casing Cementing Minimum Requirements.

Lightweight or low density cements are further desirable for blocking, plugging and filling of conduits which are used in the recovery of materials such as hydrocarbons, potash, coal, copper, potassium chloride, minerals, etc. Such operations are necessary when mine shafts, tunnels or excavations, as well as pipelines used in the transportation of produced fluids, are abandoned, flooded, clogged or otherwise no longer useful.

In one method known in the art, the conduit is sealed or backfilled by the use of a foamed cement grout. Often, however, the foamed grout, once mixed, becomes overly viscous, and tends to compress and cause friction and back-pressure when pumped through the conduit. Such difficulties are often even more pronounced as it becomes necessary to move the grout over great distances, as from the surface to an injection point far inside a tunnel. Another problem encountered with conventional grouting systems during the filling of conduits stems from the inability of the grout to be delivered continuously at a high volume rate over sustained periods. Alternative low density cement based compositions have been used for blocking, plugging and/or filling of conduits. Such compositions need to be capable of exhibiting enhanced compressive, tensile and bond strengths upon setting.

Since many commercially available lightweight low density cement compositions are unacceptable for subterranean zones or formations having low fracture gradients, alternative lightweight cement compositions should be capable of minimizing or eliminating the danger of fracturing in weak subterranean formations and/or zones. Further, it is essential that such alternative lightweight low density cements exhibit sufficient compressive, tensile and bond strengths upon setting. Low density cement compositions characterized by such properties would further be acceptable for use in such applications as blocking or plugging abandoned pipelines and back filling mine shafts, tunnels and excavations.

### Summary of the Invention

The cement mix of the invention, when formulated into a hydraulically-active, cementitious slurry, is suitable for cementing within a subterranean formation for wells, including oil wells, gas wells, water wells, injection wells, disposal wells and storage wells. In addition, the cement mix, when formulated into a slurry, is suitable for use in such cementing operations as the blocking, plugging or back filling of conduits, including conduits used in hydrocarbon recovery (such as abandoned pipelines) as well as conduits used in the recovery of such materials as copper, potassium chloride, potash, coal, minerals, etc. Cementitious slurries as defined herein exhibit the requisite compressive, tensile and bond strengths for such intended purposes.

The cement mix comprises (i) at least one cementitious material; (ii) a reactive pozzolanic material and (iii) an inorganic salt accelerator and/or alkaline metal oxide. The cement mix may further contain an alkali metasilicate and/or alkali silicate. In addition, it may further contain a lightweight density modifying agent, such as ceramic spheres, glass spheres, plastic spheres, perlite, gilsonite and coal. The cement mix may further contain a foaming agent and a gas such as nitrogen gas or air.

The cementitious material may be Portland cement or a mixture of two or more components selected from Portland cement, fly ash, slag, silica fume, gypsum, bentonite and limestone.

The reactive pozzolanic material is at least one member selected from diatomaceous earth, zeolite and an aluminum silicate. In a preferred embodiment, the cement mix contains a diatomaceous earth having a Brunauer Emmett Teller (BET) nitrogen adsorption specific surface area between from about 30 to about 100 m²/g. In another preferred embodiment, the reactive pozzolanic material contains both a diatomaceous earth having a BET nitrogen adsorption specific surface area between from about 30 to about 100 m²/g and zeolite.

The inorganic salt accelerator is preferably selected from the group consisting of alkali sulfates, alkali aluminates, alkali carbonates and alkali chlorides. Suitable accelerators include sodium sulfate, potassium sulfate, lithium sulfate, lithium chloride, sodium carbonate, sodium aluminate, potassium chloride, sodium chloride and calcium chloride. Such materials are typically used when the set temperature is low, such as when the set temperature is from 10 to 50° C.

The cement mix may further contain an alkaline metal oxide, such as lime or calcium oxide. Such materials may be used in combination with the inorganic salt accelerator. Such materials provide expansion and enhance the reaction between the reactive pozzolanic materials and the cementitious component.

A cementitious slurry, formulated from the cement mix, has a density less than or equal to 1500 kg/m³, preferably less than or equal to 1300 kg/m³. The slurry may contain fresh water, salt water, formation brine or synthetic brine or a mixture thereof.

The cementitious slurry may be used to cement within a subterranean formation for a well by pumping the cementitious slurry into the subterranean formation and then allowing the cementitious slurry to set. The compressive strength of the cementitious slurry, when set, is greater than or equal to 3.5 MPa after 48 hours at a temperature of 15° C or higher.

The cementitious slurry may further be used to block or plug an abandoned pipeline or back filling mine shafts, tunnels and excavations by being pumped into the abandoned pipeline, mine shafts, tunnels or excavation and allowing it to set.

Use of such slurries in oil or gas wells further helps to establish zonal isolation within the cemented wellbore of the subsurface formations. Such cementitious slurries further may prevent the migration of gases through cemented columns.

### Detailed Description of the Preferred Embodiments

The cement mix of the invention, when formulated into a hydraulically-active, cementitious slurry, is suitable for cementing within a subterranean formation for such wells, like oil wells, gas wells, water wells, injection wells, disposal wells and storage wells.

In addition, when formulated into a cementitious slurry, the cement mix is suitable for blocking, plugging or back filling conduits. Such conduits include pipelines, mine shafts, tunnels and excavations and are exemplified by hydrocarbon recovery conduits as well as conduits used in the recovery of potash, coal, copper, potassium chloride, minerals, etc.

The cement mix comprises Portland cement or a mixture of two or more cementitious components, a reactive pozzolanic material and an inorganic salt accelerator and/or alkaline metal oxide. Further, the cement mix preferably contains an alkali metasilicate and/or alkali silicate. The cement mix may further contain a lightweight density modifying agent, such as ceramic spheres, glass spheres, plastic spheres, coal, etc.

While Portland cement is typically used as the sole cementitious component, the cementitious material may further be a mixture of two or more components. For instance, a mixture of a combination of any of Portland cement, fly ash, slag, silica fume, gypsum, limestone and bentonite may be used. Typically, between from about 10 to about 70, preferably between from about 35 to about 65, weight percent of the cement mix is Portland cement or the referenced mixture.

Any of the oil well type cements of the class "A-H" as listed in the API Spec 10A, (22nd ed., January 1995 or alternatively ISO 10426-1), are suitable. Especially preferred is Portland cement, preferably an API Class A, C, G or H cement. Alternatively, the Portland cement may be a Type I, II, III or V ASTM construction cement. Type II is especially desirable where moderate heat of hydration is required. Type III or high early cement is typically preferred when early compressive strength is needed. Type V is preferred when high sulfate resistance is required.

In a preferred embodiment, the cement is a high early cement since such cements typically set faster than conventional Portland cement.

When used, the slag has hydraulic properties and, preferably, is ground-granulated blast furnace slag with a minimum glass count of about 95% and a fine particle size of about 1 to about 100 µ, preferably less than about 45 µ, most preferably less than 10 µ or a fineness of about 310 to about 540 m²/kg. When mixed with Portland cement, the cement mixture may contain between from about 90 weight percent cement and 10 weight percent slag to 10 weight percent cement and 90 weight percent slag with all percentages based on dry weight.

The cement of the cement mix is that which is sufficient to impart to a cementitious slurry (of density less than or equal to 1500 kg/m³) good compressive strength. For instance, the cement mix may exhibit a compressive strength of 3.5 MPa within 48 hours after being introduced into the formation or zone.

Typically, between from about 10 to about 60 weight percent, preferably in the range of about 15 to about 50 weight percent of the cement mix is the reactive pozzolanic material.

The reactive pozzolanic material is a material which reacts with lime in the cementitious component. Typically, the particle diameter of the reactive pozzolanic material is less than or equal to 50 µ, more typically less than or equal to 20 µ.

In a preferred embodiment, the reactive pozzolanic material is diatomaceous earth. The diatomaceous earth may be any technical grade such as Kiselguhr, guhr, diatomite, tripolite, tellurine, tetta silicea, ceyssatite or fossil flour.

Typically, the diatomaceous earth exhibits a specific surface area between from about 30 to about 100, preferably between from about 35 to about 55, m²/g. The specific surface area may be determined by using the Brunauer-Emmett-Teller (BET) model of physical adsorption wherein the sample being tested is first dried for 1 hour at 350°C. Nitrogen adsorption at liquid nitrogen temperatures from a gas mixture of 30% nitrogen/70% helium mixture at atmospheric pressure was followed by outgassing at room temperature. Testing was conducted using a Monosorb rapid surface analyzer made by Quantachrome Instruments. The volume of nitrogen adsorbed and desorbed was sensed by changes in the thermal conductivity of the gas mixture. The volume of nitrogen needed to form a monolayer on the surface of the test sample was then determined using the BET equation.

The diatomaceous earth may be acid washed. Preferred are those diatomaceous earths containing 95+ silicon dioxide. A most preferred diatomaceous earth is the lightweight friable diatomaceous earth sold under the trade name Diacel D, commercially available from Chevron Phillips Chemical Company LP.

The reactive pozzolanic material may further be zeolite or aluminum silicate or a mixture of one or more of diatomaceous earth (as referenced above), zeolite and aluminum silicate. In one preferred embodiment, the reactive pozzolanic material is diatomaceous earth with one or more of zeolite and aluminum silicate.

For instance, in one embodiment, the reactive pozzolanic material contains up to about 25, more typically between from about 10 to about 15, weight percent of zeolite. Thus, when the cement mix contains 60 weight percent of diatomaceous earth, the amount of zeolite in the cement mix may be as high as about 15 weight percent.

The aluminum silicate is typically comprised of SiO₂/Al₂O₃/Fe₂O₃. Most typically the aluminum silicate is kaolin, calcined kaolin or kaolinite (metakaolin) or mixtures thereof. Such aluminum silicate may also be referred to as China Clay. Other suitable forms of aluminum silicate include, but are not limited to, halloysite, dickite, and nacrite, and mixtures thereof, as well as mixtures of these with materials with kaolin and/or metakaolin.

In a preferred embodiment, the reactive pozzolanic material contains up to about 75 weight percent of aluminum silicate, the remainder being diatomaceous earth. Thus, where the cement mix contains 60 weight percent of diatomaceous earth, the amount of aluminum silicate in the cement mix may be as high as 45 weight percent.

When the reactive pozzolanic material contains diatomaceous earth, zeolite and aluminum silicate, the amount of diatomaceous earth in the reactive pozzolanic material is preferably greater than or equal to 25 weight percent; the remainder being the combination of combination of zeolite and aluminum silicate.

The alkali metasilicate and/or alkali silicate typically serves as an accelerator and/or suspending agent. In addition, it assists in the lowering of the density of the cementitious slurry and thereby permits a greater amount of water to be used in the slurry.

The alkali metasilicate and/or alkali silicate is preferably sodium metasilicate or sodium silicate. When present the cement mix typically contains between from about 0.5 to about 5 weight percent of alkali metasilicate and/or alkali silicate. A preferred sodium metasilicate for use in this invention is commercially available from BJ Services Company as A-2, SMS or EXC.

The inorganic salt accelerator is typically an alkali sulfate, alkali aluminate, alkali carbonate and alkali chloride. Suitable inorganic salt accelerators include sodium sulfate, potassium sulfate, lithium sulfate, lithium chloride, sodium carbonate, potassium chloride, sodium chloride, sodium aluminate and calcium chloride. In a particularly preferred embodiment, the inorganic salt accelerator is an alkali halide.

In addition to, or in place of, the inorganic salt accelerator, the cement mix may contain an alkaline metal oxide, such as lime or calcium oxide. The cement mix preferably contains an alkaline metal oxide when the set temperature of the cementitious slurry is greater than or equal to 60° C. The alkaline metal oxide accentuates the reaction between the reactive pozzolanic material and lime at such temperatures and thereby enhances the strength of the resulting product. Where the set temperature is lower, such as at 10 to 50° C, the cement mix only contains the inorganic salt accelerator.

Typically between from about 0.1 to about 20 weight percent of the cement mix are the inorganic salt accelerator and/or alkaline metal oxide.

In those instances where an inorganic salt accelerator is employed without the use of an alkaline metal oxide in a cement mix where the reactive pozzolanic material contains both diatomaceous earth and zeolite, it is preferred that the diatomaceous earth have a BET nitrogen adsorption specific surface area between from about 30 to about 100 m²/g.

Preferred inorganic salt accelerators include sodium aluminate, sodium carbonate and sodium sulfate wherein between from about 0 to about 1 weight percent of the cement mix is sodium aluminate, between from about 0 to about 2 weight percent of the cement mix is sodium carbonate and between from about 0 to about 10 weight percent of the cement mix is sodium sulfate.

Further preferred inorganic salt accelerators are sodium carbonate and sodium sulfate wherein between from about 0 to about 2 weight percent of the cement mix is sodium carbonate and between from about 0 to about 10 weight percent of the cement mix is sodium sulfate.

Still further preferred is sodium sulfate wherein between from about 0 to about 15, more preferably between from about 0.5 to about 10, weight percent of the cement mix is sodium sulfate.

The cement mix may contain a lightweight density modifying agent. Suitable lightweight density modifying agents (which, like the diatomaceous earth, may decrease the density of the cementitious slurry) include glass or ceramic microspheres, such as hollow ceramic spheres, hollow glass spheres, plastic spheres, perlite, gilsonite and coal. The cementitious slurry may further contain a foaming agent and a gas such as nitrogen gas or air.

The amount of lightweight density modifying agent present in the cement mix is an amount sufficient to lower the density of the cementitious slurry to the desired range. When present, the amount of lightweight density modifying agent in the cement mix is typically between from about 1 to about 50 weight percent of cement mix.

Preferably, the microspheres exhibit a density of between from about 0.2 to about 0.9, most preferably about 0.35 to 0.4, g/cc and an isotatic crush resistance of from about 1000 to about 20,000 psi. More preferably the spheres are made out of borosilicate glass. Most preferred microspheres are commercially available from 3M and are sold under the name Scotchlite™ Glass Bubbles HGS Series. They are manufactured with tolerances for a specific pressure. For instance, the HGS-5000 is rated to a 37.9 MPa (5500 psi) crush strength and HGS-10000 to 67 MPa (10000 psi).

In a preferred embodiment of the invention, the cement mix contains Portland cement or a cement mix, glass, ceramic or plastic microspheres, sodium metasilicate (as a suspension agent for the microspheres), diatomaceous earth, and, as accelerator, potassium chloride, lime or calcium oxide. Cementitious slurries formulated from such cement mixes are particularly efficacious at higher downhole temperatures. For instance, such cement mixes are particularly useful at downhole temperatures of 50° C or higher. Further, such cement mixes may provide assistance in the prevention of gas migration through a column of cement.

A cementitious slurry, formulated from the cement mix, has a density less than or equal to 1500 kg/m³, preferably less than or equal to 1300 kg/m³. The slurry may contain fresh water, salt water, formation brine or synthetic brine or a mixture thereof.

The cementitious slurry may be used to cement a subterranean formation for a well by pumping the cementitious slurry into the subterranean formation and then allowing the cementitious slurry to set. For instance, the compressive strength of the cementitious slurry, when set, is greater than or equal to 3.5 MPa after 48 hours, as per Alberta Energy and Utility Board Directive 9 Casing Cementing Minimum Requirements. In some instances, the cementitious slurry may impart a compressive strength of 3.5 MPa after 48 hours at temperatures as high as 110° C. and as low as 15° C.

The cementitious slurry may be used to block or plug an abandoned pipeline or back filling of mine shafts, tunnels or excavations by being pumped into the abandoned pipeline, mine shaft, tunnel or excavation and allowing it to set. The slurry may further be used to cement a subterranean formation for an oil or gas well by pumping the cementitious slurry into the subterranean formation and then allowing the cementitious slurry to set.

The cement mix may further contain, for fluid loss control, one or more fluid loss additives. Suitable fluid loss control additives include polyvinyl alcohol, optionally with boric acid, hydroxyethyl cellulose, carboxymethyl hydroxyethyl cellulose, synthetic anionic polymers and synthetic cationic polymers. Such fluid loss control additives, when present, are typically a component of the cement mix, though it could be introduced into the cementitious slurry. When present, the amount of fluid loss control additive is between from about 0.1 to about 2 weight percent of the cement mix.

The cement mix may further contain a set retarder in order to provide adequate placement time of the cementitious slurry in deeper and hotter wells. Alternatively, the set retarder could be introduced directly into the cementitious slurry. The set retarder, when employed, should be chosen in order to minimize the effect on the compressive strength of the slurry upon setting.

Suitable set retarders include glucoheptonates, such as sodium glucoheptonate, calcium glucoheptonate and magnesium glucoheptonate; lignin sulfonates, such as sodium lignosulfonate and calcium sodium lignosulfonate; gluconic acids gluconates, such as sodium gluconate, calcium gluconate and calcium sodium gluconate; phosphonates, such as the sodium salt of EDTA phosphonic acid; sugars, such as sucrose; hydroxycarboxylic acids, such as citric acid; and the like, as well as their blends.

When employed, the amount of set retarder employed is between from about 0.1 to about 2 weight percent of the cement mix.

A plasticizing agent may further be used in the cement mix (or added directly to the slurry) to assist in control of the fluidity of the slurry. Specific examples of plasticizing agents include melamine sulfonic acid polymer condensation product, sodium polyacrylate, naphthalene sulfonic acid, sodium salt of naphthalene sulfonate formaldehyde condensate, sodium sulfonated melamine formaldehyde (SMF) and sulfonated-styrene maleic anhydride polymer. When present, the amount of plasticizer in is between from about 0.1 to about 2 weight percent of the cement mix.

The cementitious slurry is particularly useful in the treatment of weak subterranean formations having low fracture gradients.

The cementitious slurry may further be used to block or plug an abandoned pipeline or back filling mine shafts, tunnels and excavations by being pumped into the abandoned pipeline, mine shafts, tunnels or excavation and allowing it to set.

Use of such slurries in oil or gas wells further helps to establish zonal isolation within the cemented wellbore of the subsurface formations.

The following examples illustrate the practice of the present invention in its preferred embodiments. Other embodiments within the scope of the claims herein will be apparent to one skilled in the art from consideration of the specification and practice of the invention as disclosed herein. It is intended that the specification, together with the examples, be considered exemplary only, with the scope and spirit of the invention being indicated by the claims which follow.

### EXAMPLES

### Examples 1-21.

A cement mix was prepared by blending a combination of the following components: high early cement ("HE"), diatomaceous earth ("DIA"), zeolite ("Ze"), metakaolin ("MK"), sodium metasilicate (EXC"), soda ash or sodium carbonate ("Ash"), sodium sulfate ("Na₂SO₄"), sodium aluminate ("NaAl"), calcium chloride ("CaCl₂") and sodium chloride ("NaCl"). DIA is an acid washed diatomaceous earth, having a BET nitrogen adsorption specific surface area of about 46 m²/g, and is commercially available as Diacel D from Chevron Phillips Chemical Company LP.

A sufficient amount of fresh water was then added to the cement mix to reach a density of 1300 kg/m³. The resulting slurry was stirred for about 20 minutes to ensure homogeneity and dissolve any remaining lumps of dry material.

The rheology was then determined at 300, 200, 100 and 6 rpm on a rotational viscometer with an R1-B 1 rotor - bob combination (API RP10B-2/ISO 10426-2).

The compressive strength of the slurries was measured by determining the amount of time required to achieve a compressive strength of 3.5 MPa (500 psi) at 30° C; the initial set being 0.35 MPa (50 psi). The compressive strength, in MPa, at 24 hours and 48 hours was also determined.

The results of the tests are set forth in Table I below:

**Table I**

| | | | | | | | | | | | | | | | | | UCA Compressive Strength @ 30°C | | | |
|---|---|---|---|---|---|---|---|---|---|---|---|---|---|---|---|---|---|---|---|---|
| Ex. No. | HE | DIA | Ze | MK | EXC | Ash | Na₂SO₄ | NaAI | KCI | CaO | CaCl₂ | NaCl | Rheology (dial readings) | | | | 0.35 MPa | 3.5 MPa | 24 Hr. | 48 Hr. |
| | kg | kg | kg | kg | kg | kg | kg | kg | kg | kg | kg | kg | 300 | 200 | 100 | 6 | hr:mn | hr:mn | MPa | MPa |
| 1 | 530 | 380 | | | 20 | 10 | 55 | 5 | | | | | 48 | 43 | 36 | 20 | 5:10 | 48:00 | 1.87 | 3.50 |
| 2 | 480 | 430 | | | 20 | 10 | 55 | 5 | | | | | 101 | 91 | 74 | 34 | 4:52 | 39:42 | 2.2 | 3.74 |
| 3 | 485 | 430 | | | 20 | 10 | 55 | | | | | | 60 | 52 | 44 | 39 | 6:54 | 41:34 | 1.97 | 3.62 |
| 4 | 520 | 345 | | | 20 | 10 | 100 | | | | | | 82 | 68 | 58 | 43 | 5:20 | 33:28 | 2.83 | 3.8 |
| 5 | 485 | 440 | | | 10 | 10 | 55 | | | | | | 41 | 36 | 31 | 18 | 6:46 | 39:08 | 2.1 | 3.81 |
| 6 | 485 | 440 | | | 20 | | 55 | | | | | | 60 | 54 | 47 | 29 | 3:38 | 26:58 | 3.1 | 4.37 |
| 7 | 490 | 445 | | | 10 | | 55 | | | | | | 59 | 53 | 47 | 29 | 5:12 | 31:50 | 2.55 | 4.29 |
| 8 | 480 | 435 | | | 10 | | 75 | | | | | | 55 | 49 | 42 | 25 | 5:40 | 40:06 | 2.19 | 3.65 |
| 9 | 505 | 455 | | | 10 | | 30 | | | | | | 62 | 57 | 51 | 31 | 5:54 | | 1.4 | 3.06 |
| 10 | 495 | 445 | | | 5 | | 55 | | | | | | 50 | 45 | 38 | 24 | 6:34 | 42:54 | 1.98 | 3.66 |
| 11 | 490 | 455 | | | | | 55 | | | | | | 46 | 41 | 34 | 21 | 6:36 | 54:22 | 1.66 | 3.28 |
| 12 | 495 | 450 | | | | | 55 | | | | | | 44 | 39 | 33 | 19 | 6:08 | 40:06 | 1.99 | 3.92 |
| 13 | 505 | 440 | | | | | 55 | | | | | | 39 | 34 | 29 | 18 | 8:20 | | 1.18 | 2.4 |
| Comp.14 | 530 | 380 | | | 30 | | | | 20 | 40 | | | 50 | 45 | 40 | 26 | 8:52 | 59:58 | 1.13 | 2.72 |
| Comp. 15 | 490 | 445 | | | 10 | | | | | | 55 | | 48 | 42 | 35 | 22 | 9:02 | | 0.72 | 1.23 |
| Comp. 16 | 490 | 445 | | | 10 | | | | | | | 55 | 45 | 42 | 37 | 24 | 6:04 | 82:44 | 1.13 | 2.14 |
| 17 | 530 | 330 | 50 | | 20 | 10 | 55 | 5 | | | | | 45 | 40 | 35 | 18 | 4:58 | 43:00 | 2.04 | 3.71 |
| 18 | 530 | 280 | 100 | | 20 | 10 | 55 | | | | | | 62 | 54 | 46 | 24 | 6:32 | | 1.86 | 3.45 |
| 19 | 530 | 230 | 150 | | 20 | 10 | 55 | 5 | | | | | 65 | 58 | 50 | 29 | 5:02 | 43:30 | 2.4 | 3.64 |
| 20 | 530 | 205 | | 190 | 20 | | 55 | | | | | | 45 | 42 | 34 | 23 | 4:52 | 35:46 | 2.77 | 3.62 |
| 21 | 530 | 300 | | 80 | 20 | 10 | 55 | 5 | | | | | 77 | 67 | 57 | 29 | 4:34 | 45:14 | 2.41 | 3.50 |

As illustrated, when measured at 30° C, a compressive strength of 3.5 MPa was obtained in 48 hours or less for cementitious slurries having a density of 1300 kg/m² derived from the inventive cement mixes. Comparative Examples 14-16 using common industry cement accelerators exhibited a compressive strength much lower than those of the inventive slurries.

### Example 22.

A cement mix was prepared as in the above Examples from 650 kg high early cement, 300 kg diatomaceous earth and 50 kg sodium sulfate. A sufficient amount of fresh water was then added to the cement mix to reach a density of 1400 kg/m². The resulting slurry was stirred for about 20 minutes to ensure homogeneity and dissolve any remaining lumps of dry material.

The rheology was then determined at 300, 200, 100 and 6 rpm on a rotational viscometer with an R1-B1 rotor - bob combination (API RP10B-2/ISO 10426-2). The compressive strength of the slurry was measured by determining the amount of time required to achieve a compressive strength of 3.5 MPa (500 psi) at 30° C; the initial set being 0.35 MPa (50 psi). The compressive strength, in MPa, at 24 hours and 48 hours was also determined.

The results of the tests are set forth in Table II below:

**Table II**

| | | | | UCA Compressive Strength | | | |
|---|---|---|---|---|---|---|---|
| Rheology (Dial Readings) | | | | 0.35 MPa | 3.5 MPa | 24 Hr. | 48 Hr. |
| 300 | 200 | 100 | 6 | hr:mn | Hr:mn | MPa | MPa |
| 54 | 49 | 41 | 24 | 3:44 | 12:50 | 5.21 | 7.85 |

Example 22 illustrates that the requisite compressive strength for a cementitious slurry of density of about 1400 kg/m³ may be obtained in the absence of the alkali metasilicate component.

### Examples 23-38.

Cement mixes were prepared by blending HE with HGS-5000 or HGS-10000 synthetic glass bubbles (commercially available from 3M), ceramic spheres having a specific gravity of 0.7 (commercially available as LW-6 from BJ Services Company), DIA, fly ash (Pozz), 20 kg potassium chloride, 20 kg calcium oxide. 0.5 weight percent of polynaphthalene sulfonate dispersant admixture (commercially available as CD-32 from BJ Services Company) and 0.5 weight percent polyvinyl alcohol fluid loss agent (commercially available as FL-5 from BJ Services Company). The blend was then mixed with fresh water to provide a 1300 kg/m³ cement slurry. The rheology and compressive strength of the cement slurries was measured in accordance with the Examples above and the results of the tests are set forth in Table III below:

**Table III**

| | | | | | | | | | | | | | | UCA Compressive Strength | | | |
|---|---|---|---|---|---|---|---|---|---|---|---|---|---|---|---|---|---|
| Example No. | HE | Diacel D | Pozz | HGS10000 | LW-6 | HGS5000 | EXC | Temp | Rheology | | | | F.F. | 0.35 MPa | 3.5 MPa | 24 Hr. | 48 Hr. |
| | kg | kg | kg | kg | | | kg | °C | 300 | 200 | 100 | 6 | ml | Hr:mn | hr:mn | MPa | MPa |
| 23 | 629 | 200 | | 120 | | | 11 | 30 | 72 | 62 | 53 | 25 | 0 | 4:06 | 15:44 | 4.64 | 7.8 |
| 24 | 629 | 200 | | 120 | | | 11 | 60 | | | | | | 1:24 | 5:12 | 8.79 | 9.2 |
| 26 | 594 | 200 | | | 155 | | 11 | 30 | 43 | 37 | 30 | 22 | 0.39 | 4:16 | 5:10 | 5:02 | 7.22 |
| 27 | 559 | - | 200 | 190 | | | 11 | 30 | 85 | 75 | 60 | 40 | 0 | 3:48 | 6:54 | 10.31 | 21.3 |
| 28 | 559 | - | 200 | 190 | | | 11 | 60 | | | | | | 1:18 | 2:14 | 17.41 | 17.57 |
| 29 | 449 | | 350 | 150 | | | 11 | 30 | 45 | 40 | 32 | 22 | 0 | 4:32 | 12:46 | 5.11 | 7.32 |
| 30 | 449 | | 350 | 150 | | | 11 | 60 | | | | | | 1:42 | 7:20 | 9.3 | 9.58 |
| 31 | 674 | 200 | | | | 75 | 11 | 30 | 84 | 74 | 64 | 28 | 0 | 4:48 | 16:52 | 4.36 | 7.21 |
| 32 | 674 | 200 | | | | 75 | 11 | 60 | | | | | | 1:32 | 5:00 | 9.39 | 9.44 |
| 33 | 700 | 174 | | 75 | | | 11 | 30 | 37 | 33 | 28 | 24 | 0 | 5:02 | 34:50 | 2.56 | 4.43 |
| 34 | 700 | 174 | | 75 | | | 11 | 60 | | | | | | 1:42 | 8:50 | 5.91 | 6.36 |
| 35 | 499 | 350 | | | 100 | | 11 | 30 | 62 | 50 | 42 | 30 | 0 | 4:24 | 25:50 | 3.17 | 6.32 |
| 36 | 650 | 254 | | | | 45 | 11 | 30 | 49 | 42 | 36 | 28 | 0 | 3:50 | 26:50 | 3.13 | 5.71 |
| 37 | 650 | 154 | 100 | | | 45 | 11 | 30 | 32 | 27 | 23 | 15 | 0 | 5:44 | 44:40 | 2.12 | 3.64 |
| 38 | 590 | 330 | | | | 30 | 10 | 30 | | | | | | 5:56 | 47:00 | 1.71 | 3.53 |

Table III illustrates that the cement mix develops a compressive strength greater than or equal to 3.5 MPa in 48 hours at 30°C. Further, the data illustrates that the cement mixes are useful at downhole temperature of 30° C and 60° C.

### Examples 39-41.

A cement mix was prepared by blending a combination of the following components: high early cement ("HE"), diatomaceous earth ("K5200", K1000" or "WCDE"), sodium metasilicate (EXC"), soda ash ("Ash"), sodium sulfate ("Na₂SO₄") and sodium aluminate ("NaA1"). K5200 is Kenite 5200 and K1000 is Kenite 1000, both are conventional diatomaceous earths and are commercially available from Celite Corporation; and WCDE refers to a conventional diatomaceous earth, available from White Cliffs Mining, Arizona.

A sufficient amount of fresh water was then added to the cement mix to reach a density of 1300 kg/m². The resulting slurry was stirred for about 20 minutes to ensure homogeneity and dissolve any remaining lumps of dry material.

The rheology was determined at 300, 200, 100 and 6 rpm on a rotational viscometer with a R-1 and B-1 rotor bob combination (API RP10B-2/ISO 10426-2). The compressive strength of the slurries, in MPa, was measured at 24 and 48 hours at 30°C; the initial set being 0.35 MPa (50 psi).

The results of the tests are set forth in Table IV below:

**Table IV**

| Ex. No. | HE | K5200 | K1000 | WCDE | EXC | Ash | Na₂SO₄ | NaAl | Rheology (dial readings) | | | | 0.35 MPa | 24 Hr. | 48 Hr. |
|---|---|---|---|---|---|---|---|---|---|---|---|---|---|---|---|
| | kg | kg | kg | kg | kg | kg | Kg | Kg | 300 | 200 | 100 | 6 | hr:mn | MPa | MPa |
| 39 | 530 | 380 | | | 20 | 10 | 55 | | 25 | 20 | 16 | 10 | 8:22 | 0.96 | 1.27 |
| 40 | 530 | | 380 | | 20 | 10 | 55 | | 36 | 30 | 24 | 11 | 6:34 | 1.25 | 1.55 |
| 41 | 530 | | | 380 | 20 | 10 | 55 | | 65 | 55 | 47 | 26 | 5:26 | 1.4 | 2.33 |

### Example 42.

A cement mix was prepared by blending 590 kg of high early cement, 330 kg of diatomaceous earth, 10 kg of sodium metasilicate, 20 g potassium chloride and 20 g calcium oxide, 30 kg of HGS-5000 Scotchlite™ Glass Bubbles, 0.5 weight percent of CD-32 and 0.5 weight percent FL-5. The diatomaceous earth was MN-84, a natural diatomaceous earth produced by EaglePicher, Reno Nevada, having a BET nitrogen adsorption specific surface area of about 45 m²/g. The resulting slurry was stirred for about 20 minutes to ensure homogeneity and dissolve any remaining lumps of dry material. The blend was then mixed with fresh water to provide a 1300 kg/m³ cement slurry.

The compressive strength of the slurries was measured by determining the amount of time required to achieve a compressive strength in 24 and 48 hours of 3.5 MPa (500 psi) at 30° C; the initial set being 0.35 MPa (50 psi). The results of the tests are set forth in Table V below:

**Table V**

| | | | | UCA Compressive Strength | | | |
|---|---|---|---|---|---|---|---|
| Rheology | | | | 0.35 MPa | 3.5 MPa | 24 hr. | 48 Hr. |
| 300 | 200 | 100 | 6 | hr:mn | hr:mn | MPa | MPa |
| 39 | 35 | 29 | 18 | 5:08 | 43:00 | 1.96 | 3.80 |

### Examples 43-44.

A cement mix was prepared by blending a combination of the following components: 560 kg high early cement, Diacel D diatomaceous earth ("DIA"), 20 g potassium chloride, 20 g calcium oxide, sodium metasilicate ("EXC") and silica fume, commercial available as Microsil-12P ("MS-12") from BJ Services Company. The resulting slurry was stirred for about 20 minutes to ensure homogeneity and dissolve any remaining lumps of dry material. The blend was then mixed with fresh water to provide a 1325 kg/m³ cement slurry.

The compressive strength of the slurries was measured by determining the amount of time required to achieve a compressive strength in 24 and 48 hours of 3.5 MPa (500 psi) at 30° C; the initial set being 0.35 MPa (50 psi) and both bottom hole circulating temperature ("BHCT") and bottom hole static temperature ("BHST") being 30°C. The results of the tests are set forth in Table VI below:

**Table VI**

| | | | | | | | | UCA Compressive Strength | | | |
|---|---|---|---|---|---|---|---|---|---|---|---|
| Ex. | DIA | MS12P | EXC | Rheology | | | | 0.35 MPa | 3.5 MPa | 24 Hr. | 48 Hr. |
| No. | kg | kg | kg | 300 | 200 | 100 | 6 | hr:mn | hr:mn | MPa | MPa |
| 43 | 185 | 185 | 30 | 65 | 59 | 54 | 45 | 4:16 | 34:06 | 2.5 | 4.6 |
| 44 | 190 | 190 | 20 | 42 | 38 | 34 | 25 | 4:42 | 45:24 | 1.7 | 3.59 |

From the foregoing, it will be observed that numerous variations and modifications may be effected without departing from the true spirit and scope of the novel concepts of the invention.

## Claims

1. A cement mix comprising:
(a) Portland cement or a mixture comprising at least two components selected from the group consisting of Portland cement, fly ash, slag, silica fume, gypsum, bentonite and limestone;
(b) a reactive pozzolanic material selected from at least one member consisting of:
(i) diatomaceous earth;
(ii) zeolite; and
(iii) an aluminum silicate
(c) an alkali metasilicate and/or alkali silicate; and
(d) an inorganic salt accelerator and/or an alkaline metal oxide
provided that when component (d) is only an inorganic salt accelerator and the reactive pozzolanic material contains both diatomaceous earth and zeolite, the diatomaceous earth has a BET nitrogen adsorption specific surface area between from about 30 to about 100 m²/g.

2. The cement mix of Claim 1, wherein the inorganic salt accelerator is sodium sulfate, the reactive pozzolanic material is diatomaceous earth and zeolite and the amount of alkali metasilicate and/or alkali silicate in the cement mix is from 0 to 5 weight percent.

3. The cement mix of Claim 1 or 2, wherein (i) the Portland cement is selected from the group consisting of API Class A, C, G and H cements and Type I, II, III or V ASTM construction cements including high early cement; and/or (ii) the reactive pozzolanic material contains aluminum silicate, preferably kaolin or metakaolin; and/or (iii) the alkali metasilicate and/or alkali silicate is selected from the group consisting of sodium metasilicate and sodium silicate ; and/or (iv) the inorganic salt accelerator is selected from the group consisting of alkali sulfates, alkali aluminates, alkali carbonates, alkaline chlorides and alkali chlorides and preferably is either sodium sulfate, potassium sulfate, lithium sulfate, lithium chloride, sodium carbonate, sodium aluminate, potassium chloride, calcium chloride or sodium chloride; and/or (v) the component (d) is an alkaline metal oxide, such as calcium oxide.

4. The cement mix of any of Claims 1 to 3, wherein the reactive pozzolanic material is diatomaceous earth having a BET nitrogen adsorption specific surface area between from about 30 to about 100 m²/g.

5. The cement mix of any of Claims 1 to 4, further comprising at least one lightweight density modifying agent, such as glass spheres, ceramic spheres, plastic spheres, perlite, gilsonite, coal and nitrogen gas or air.

6. A cementitious slurry comprising water and the cement mix of any of Claims 1 to 5 and preferably wherein the density of the cementitious slurry is less than or equal to 1500 kg/m³.

7. A method of cementing within a subterranean formation for an oil well, gas well, water well, injection well, disposal well or storage well, the method comprising the steps of:
pumping the cementitious slurry of Claim 6 into the subterranean formation; and
allowing the cementitious slurry to set.

8. The method of Claim 7, wherein cementing occurs in a section of a well penetrating subterranean formation and further wherein the slurry is allowed to set up in the well to provide zonal isolation in the wellbore.

9. A method of blocking, plugging or back filling a pipeline, mine shaft, tunnel or excavation, the method comprising the steps of:
pumping the cementitious slurry of Claim 6 into the pipeline, mine shaft, tunnel or excavation; and
allowing the cementitious slurry to set.

10. The method of any of Claims 7 to 9, wherein the compressive strength of the cementitious slurry, when set, is greater than or equal to 3.5 MPa after 48 hours at 15° C or higher.
